# EUROPEAN PATENT SPECIFICATION

(11) **EP 0 806 285 B1**
(45) Date of publication and mention of the grant of the patent: **31.10.2001**
(21) Application number: 97303143.8
(22) Date of filing: 08.05.1997
(51) Int. Cl.: B29C 70/08, E04C 5/00, D03D 1/00

(54) **Fiber structure for fiber reinforced composite material and method of making fiber reinforced composite material**
Faserstruktur für faserverstärktes Verbundmaterial und Verfahren zur Herstellung eines faserverstärkten Verbundmaterials
Structure de fibres pour matériau composite renforcé de fibres et procédé de fabrication d'un matériau composite renforcé de fibres

(30) Priority: 08.05.1996 JP 11341896
(43) Date of publication of application: 12.11.1997
(73) Proprietor: Nippon Mitsubishi Oil Corporation, Tokyo (JP)
(72) Inventor: Kude, Yukinori, Yokohama-shi, Kanagawa-ken (JP); Sohda, Yoshio, Yokohama-shi, Kanagawa-ken (JP)
(74) Representative: Ritter, Stephen David

(56) References cited:
- EP-A- 0 373 379
- GB-A- 2 088 914
- US-A- 4 090 002

## Description

### BACKGROUND OF THE INVENTION

### Field of the Invention

The present invention relates to a fiber structure for fiber reinforced composite material and a process for making fiber reinforced composite materials.

### Prior Art

Fiber reinforced composite materials are of light weight and substantially enhanced in the stiffness and the resiliency as well as in the thermal characteristics so as to increase the thermal conductivity or decrease the thermal expansivity, and widely used as industrial materials.

However, in conventional fiber reinforced composite materials the number and arrangement of fiber axes is fixed so that there is no difference in the properties of the fiber structure between the inner side and the outer surface side.

Thus, for example, the stiffness and thermal characteristics of such conventional fiber reinforced composite materials are constant and do not vary between the inner side and the outer surface side.

When the conventional fiber reinforced composite material has been bonded to another material, its bonding strength stays low due to its lower rate of thermal expansivity or its higher rate of resiliency. It is also found difficult to have a desired rate of thermal conductivity along one direction throughout near-surface regions.

Conventional types of unidirectionally fiber reinforced composite material require a considerable amount of labor for aligning fibers in one specific direction. It is very hard to produce unidirectionally fiber reinforced composite materials which are uniform in the loading of fiber.

European Patent No. 0 373 379 discloses the use of non-reinforcing fibers together with reinforcing fibers and the removal of the non-reinforcing fibers before the formation of a matrix, thus, providing passages for easily introducing the matrix.

In U.S. Patent No. 4 090 002 a fiber-reinforced plastic structure is obtained by weaving fibers in one direction about one or more spacing members located angularly to the fibers.

### Object of the Invention

The present invention is directed towards attenuating the foregoing disadvantages of conventional fiber reinforced composite materials and its object is to provide a process for making a fiber structure for fiber reinforced composite material in which differences between the inner side and the outer surface side are given in the mechanical and thermal properties by varying the level of fiber reinforcement between the outer and inner sides.

Also, it is another object of the present invention to provide a process for making a unidirectionally fiber reinforced composite material which is simple and low in production cost by overcoming the disadvantages of conventional types of unidirectionally fiber reinforced composite material.

### Summary of the Invention

A process for making a fiber structure for fiber reinforced composite material according to the present invention is implemented by subjecting a fiber structure constituted integrally by reinforcing fibers and non-reinforcing fibers to a physical or chemical treatment to substantially remove or modify the non-reinforcing fibers.

Also, a process for making a fiber reinforced composite material according to the present invention is implemented by subjecting a fiber structure constituted integrally by reinforcing fibers and non-reinforcing fibers to a physical or chemical treatment, before or after impregnating the fiber structure with a matrix, to substantially remove or modify the non-reinforcing fibers.

The fiber structure defined in claim 10 of the present invention may be selected from a substantially unidirectional fabric in which weft yarns are lower in the density than warp yarns, a two-dimensionally woven structure, a three-dimensionally woven structure, a network structure, and a laminated structure.

The three-dimensionally woven structure is a fabric material woven three-dimensionally with reinforcing fibers or a combination of reinforcing and non-reinforcing fibers and may include one-, two-, three-, four-, or more axis stranded structures such as braids.

The two-dimensionally woven structure is a fabric material woven two-dimensionally with reinforcing fibers or a combination of reinforcing and non-reinforcing fibers and may include one-, two-, three-, four-, or more axis stranded structures.

The fiber structure defined in the present invention may be a network structure such as a mesh made by overlapping reinforcing fibers along two, three, or more fiber axes to form a matrix construction and bonding them at each intersection with a thermoplastic resin.

The present invention provides a process according to claim 1 for making a fiber reinforced composite material or a fiber structure for fiber reinforced composite material from a combination of preferably two or more of one-, two-, and thee-axis, two- or three-dimensional woven fabrics so that the mechanical and thermal properties, and if needed, the electrical properties are changed at desired locations. More preferably, the fiber structure is continuous in at least one of multiple fiber axes which are variable so that it is intensively reinforced on the direction. This will ease a radical change in the property derived from each interface in the fiber structure.

The physical or chemical treatment defined in the present invention may be a process for substantially removing or modifying non-reinforcing fibers while practically maintaining the shape and properties of reinforcing fibers.

More specifically, the process is selected from thermal treatment such as carbonization or heating, oxidizing treatment such as burning or using oxidizers, reducing treatment using reducers, acid treatment using e.g. sulfuric acid or nitric acid, alkali treatment using e.g. sodium hydroxide or potassium hydroxide, solvent treatment such as solubilization, and electrical treatment such as electrolysis.

The physical or chemical treatment is encouraged by any combination of ultrasonic, heating, cooling, pressurizing, and depressurizing processes.

The process for substantially removing or modifying the non-reinforcing fibers is implemented by removing or modifying generally 50 % or more in weight of the components of the non-reinforcing fiber, preferably 60 % or more in weight, more preferably 80 % or more in weight, through heat treatment, chemical decomposition, or carbonization so that the intrinsic physical properties of the non-reinforcing fibers are partially or entirely eliminated.

The reinforcing fiber defined in claim 10 of the present invention may be a fiber material which is not substantially removed or modified through the prescribed physical or chemical treatment and more specifically, may not substantially be varied in the physical properties.

More specifically, the reinforcing fiber is selected from organic fiber, ceramic fiber, carbon fiber, and metallic fiber, depending on the type of physical or chemical treatment to be used.

The distance between any two adjacent reinforcing fibers ranges from 0 mm to 100 mm, preferably from 0 m to 10 mm. The reinforcing fiber may be twisted, detwisted, or non-twisted. The number of twists may be 0.1 to 20 times per meter. In case of non-twisted mode, split yarn is used.

The diameter of the reinforcing fiber may be 4 to 30 micrometers and preferably, ranges 6 to 15 micrometer. The reinforcing fibers may be bundled to 100 to 100,000 or preferably to 500 to 80,000. The reinforcing fiber may be a greige material.

The organic fiber is selected from nylon fiber, polyacrylonitrile fiber, aramid fiber, polyethylene fiber, Teflon fiber, and the like which is resistant to removal or modification by the electrolytic or acid treatment.

The ceramic fiber is selected from silicon carbide fiber, alumina fiber, glass fiber, titanium carbide fiber, potassium nitride fiber, and the like which is resistant to removal or modification by the acid or oxidizing treatment.

The carbon fiber is selected from those derived from petroleum pitch, coal pitch, polyacrylonitrile, rayon fibers, and the like which is resistant to removal or modification by the acid or carbonizing treatment. Infusiblized fiber and pre-carbonized fiber which are precursor fiber of the carbon fiber can also be used.

The metallic fiber is selected from, for example, stainless steel fiber, copper fiber, aluminum fiber, nickel fiber, titanium fiber, tungsten fiber, and the like which is resistant to removal or modification by the heat treatment such as burning or carbonization.

The reinforcing fiber may be any of the above fibers which is light weight relatively stable chemically and physically, and enhanced in the thermal conductivity and the resiliency.

The reinforcing fiber may be a combination of two, three, or more of the above fibers.

The reinforcing fiber may be any combination of the above fibers in which desired regions are separately differentiated from the remaining region.

The non-reinforcing fiber defined in the present invention is a fiber which can substantially be removed or modified by the prescribed physical or chemical treatment and preferably, may be a fiber of which physical properties are substantially varied by the treatment.

Preferably, the non-reinforcing fiber is a fiber which can be readily woven with the reinforcing fiber and usually has a tensile strength of 10 MPa - 10 GPa, preferably 40 MPa - 10 GPa, more preferably 50 MPa - 10 GPa and most preferably 100 MPa - 8 GPa.

The diameter of the non-reinforcing fiber ranges 4 to 30 micrometers and preferably, 6 to 15 micrometers. When a plurality of the non-reinforcing fibers are bundled in a number ranging from 1 to 10,000 or preferably, 500 to 5,000, a resultant bundle is generally 4 to 5,000 micrometers or preferably, 500 to 2,500 micrometers in the diameter.

The distance between any two adjacent non-reinforcing fibers is such a length that the reinforcing fibers can be bonded to each other by the non-reinforcing fibers and that the fiber structure is impregnated with a matrix and may preferably be 0 to 200 mm or more preferably, 0 to 50 mm. If the distance between warp yarns is smaller than the above range, the impregnation of the matrix will be declined hence lowering the effect of reinforcement. If the distance is greater than the above range, the bonding strength of the reinforcing fibers will be declined thus lowering the efficiency of production.

The non-reinforcing fibers is substantially removed or modified by the treatment so that their function as the fibers is canceled, but may not completely be eliminated. The remaining of the non-reinforcing fibers may generally be less than 50 % in weight, preferably, 40 % in weight, or more preferably, 20 % in weight.

The non-reinforcing fiber is selected from organic fiber, carbon fiber, and metallic fiber depending on the type of the treatment to be used. Usually, the non-reinforcing fiber is selected from fibers belonging to a class different to the reinforcing fiber to be combined. For example, if reinforcing fiber is carbon fiber, organic fiber or metallic fiber is preferably selected. Table 1 shows the preferable combinations.

**Table 1**

| | Reinforcing fiber | Non-reinforcing fiber |
|---|---|---|
| 1 | carbon fiber | organic fiber, metallic fiber |
| 2 | ceramic fiber | organic fiber, metallic fiber, carbon fiber |
| 3 | organic fiber | metallic fiber |
| 4 | metallic fiber | organic fiber, carbon fiber |

The organic fiber is selected from synthetic fibers including nylon fiber, polyacrylonitrile fiber, aramid fiber, and polyethylene fiber, natural fibers including cotton fibers and silk fibers, and their combination, which can easily be removed or carbonized by decomposition of the acid treatment or burning of the thermal treatment.

The carbon fiber is selected from those derived from petroleum pitch, coal pitch, polyacrylonitrile, rayon fibers, and the like which can easily be removed or modified by the acid or other treatment. The carbon fiber includes infusiblized fiber and pre-carbonized fiber.

The metallic fiber is selected from, for example, aluminum fiber, nickel fiber, ferrous fiber, zinc fiber, and copper fiber which can easily be removed or modified by the acid or alkali treatment.

The non-reinforcing fiber may be any combination of the above fibers depending on the type of the treatment and most preferably, any of the organic fibers. For example, a non-organic fiber reinforced composite material in which the inner side and the outer surface side are different from each other in the physical properties is prepared by heat treatment of the reinforcing fibers of carbon material and the non-reinforcing fibers of aramid material. This composite material will be improved in that weaving of the reinforcing fibers is facilitated thus providing a capability of shape retention, that escape of the matrix is prevented during the impregnation of the matrix before the aramid fibers are decomposed by heating up to over 800 ° C, and that the aramid fibers when having been decomposed by heat treatment rarely provide the function of the reinforcing fibers and affect the mechanical, thermal, and electromagnetic properties of the material.

The non-reinforcing fibers of various organic materials are different from each other in the decomposing temperature pertinent to thermal decomposition, the influence to the physical properties of the remaining components in the fiber reinforced composite material, and the resistance to the chemical treatment such as acid treatment. Hence, a variety of the organic fibers can selectively be used depending on the type of a matrix, the physical or chemical condition, and the thermal history in production.

The fiber structure of the non-reinforcing fibers and the reinforcing fibers may be implemented by assigning the reinforcing fibers to a three or two dimensionally woven main fabric and the non-reinforcing fibers to fabric supplements woven along desired fiber axes or vice versa.

Also, any other appropriate combination may be employed; for example, the reinforcing fibers of a carbon material and the non-reinforcing fibers of an organic material which can be carbonized, the reinforcing fibers of a ceramic material and the non-reinforcing fibers of a carbon material which can be removed by oxidization, the reinforcing fibers of a carbon material and the non-. reinforcing fibers of a metallic material which can be decomposed using acid, or the reinforcing fibers of a metallic material and the non-reinforcing fibers of an organic material which can be carbonized.

A planar web or sheet of the fiber structure such as a unidirectional material or two-dimensionally woven fabric for fiber reinforced composite material may be prepared by laminating pre-pregs impregnated with or without a matrix resin such as thermoplastic resin or thermoset resin, and subjecting a resultant laminated structure to steps of impregnation of the matrix resin, if not impregnated, curing with or without heat treatment, and physical or chemical treatment to substantially remove or modify the non-reinforcing fibers.

The unidirectional material or two-dimensionally woven fabric may be made by any known weaving method such as plain weaving, twill weaving, or satin weaving.

The fiber structure for fiber reinforced composite material and the fiber reinforced composite material according to the present invention may preferably be a long fabric having a length of more than 10 mm or a combination of a long and a short fabric.

The laminated structure made of two-dimensionally woven fabrics or network fabrics may have non-woven fabric such as felt interleaved.

The fiber reinforced composite material according to the present invention may be provided at specific regions with a combination of the reinforcing fibers and the non-reinforcing fibers. While the region depends on the size of the material, its thickness may be 0.2 cm at minimum, preferably more than 2 cm and more preferably over 20 cm. The maximum of the thickness is not particularly limited but may be 100 cm or smaller and preferably, less than 50 cm.

The interface where the number of fiber axes of the reinforcing fibers in the fiber structure shifts is arbitrarily shaped and may be planar or curved.

The inner side of the fiber structure or the fiber reinforced composite material according to the present invention covers all areas in a volume of the material of a desired shape.

The inner side of the fiber reinforced composite material of the present invention may incorporate a three-dimensionally woven, three-axis fiber reinforced composite material or three-dimensionally woven, two-axis fiber reinforced composite material. While the inner side of the material exhibits higher mechanical and thermal characteristics, the outer surface side of a desired region consists of a three-dimensionally woven, single-axis fiber. reinforced composite material. Accordingly, a resultant integrally constituted structure of the fiber reinforced composite material where the number of fiber axes is different between the outer side and the inner side is provided having improved mechanical and thermal characteristics.

The fiber reinforced composite material consists mainly of the reinforcing fibers and the matrix.

The matrix serves as an essential member of the fiber reinforced composite material for bonding or holding the fibers to each other. The matrix dictates the orientation and alignment of the reinforcing fibers and will contribute to the quality of the fiber reinforced composite material.

The matrix may be selected from known agents used for conventional fiber reinforced composite materials and preferably, is one which can hardly be removed or modified substantially by the physical or chemical treatment above described. For example, organic, ceramic, carbon, or metallic matrix is successfully used.

The organic matrix may be thermoplastic resin or thermoset resin. More specifically, the organic matrix is selected from epoxy resin, phenol resin, furan resin, urea resin, nylon resin, petroleum pitch, coal-tar pitch, and synthetic pitch.

The ceramic matrix is selected from silicon carbide, silicon nitride, boron carbide, boron nitride, alumina, yttria, zirconia, and murite.

The metallic matrix is selected from various metals such as copper, aluminum, niobium, tungsten, nickel, and titanium, alloys such as white copper, brass, and stainless steel, and intermetallic compounds such as titanium-aluminum and niobium-aluminum.

It is known that the carbon matrix is stable for the physical or chemical treatment as well as being easily aligned with the fibers thus contributing to the improvement of the physical properties of the fiber reinforced composite material. The carbon matrix may be most preferably used.

The carbon matrixes have different characteristics depending on their fabricating methods. They may be fabricated by a technique of thermal decomposition of organic materials which is classified into two types. One of the two types involves the thermal decomposition of thermoset resin, namely phenol resin or furan resin. The other is the thermal decomposition of thermoplastic resin, namely petroleum pitch or coal pitch. The carbon matrix may also be fabricated by vapor deposition of e.g. methane, propane, butane, carbon tetrachloride, or benzene.

Accordingly, the matrix for use in the fiber reinforced composite material of the present invention is selected from a wide range of applicable agents which may be used independently or in their combination.

It is preferred in the present invention that the fiber structure is impregnated with the matrix and then subjected to the physical or chemical treatment for ease of controlling the alignment of the reinforcing fibers. The fiber structure may however be impregnated with the matrix after subjected to the treatment when the matrix which is unstable for the treatment is employed.

By subjecting the fiber structure to the physical or chemical treatment to substantially remove or modify the non-reinforcing fibers, the mechanical and thermal properties or the electromagnetic characteristics in the fiber reinforced composite material of the present invention will be varied between the inner side and the outer surface side of the material.

More specifically, the fiber reinforced composite material of the present invention is fabricated by one of the following processes.

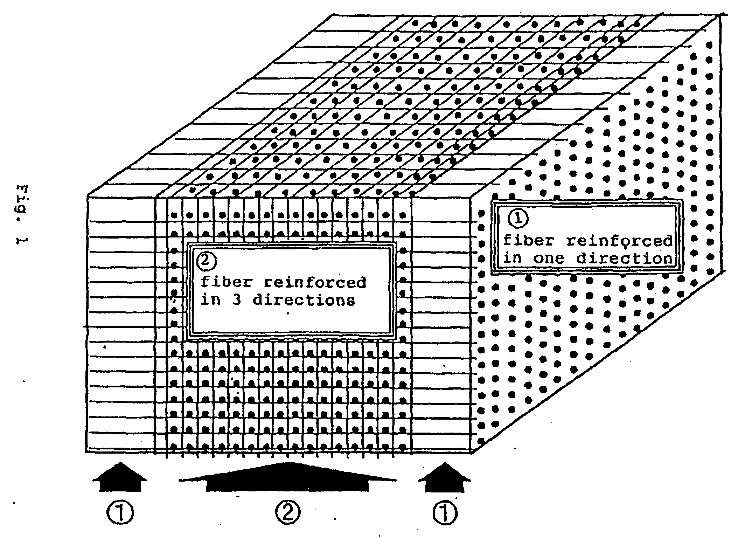

A process for making the fiber reinforced composite material comprises impregnating a three-dimensionally woven fabric constituted integrally by the reinforcing fibers and the non-reinforcing fibers with a matrix and subjecting the fabric to the physical or chemical treatment to substantially remove or modify the non-reinforcing fibers. For example, at least one or more outer surfaces of the fiber structure incorporate a three-dimensionally arranged unidirectional material, a three-dimensionally woven, one-axis fabric, or a three-dimensionally woven while the inner side arranged integral with the outer surfaces is a three-dimensionally woven, three-, four-, or more axis fabric, as shown in Fig.1, thus allowing the physical properties to be different between the outer surface side and the inner side.

Another process for making the fiber reinforced composite material comprises impregnating a laminated structure of two-dimensionally woven fabric laminas constituted integrally by the reinforcing fibers and the non-reinforcing fibers with a matrix and subjecting the laminated structure to the physical or chemical treatment to substantially remove or modify the non-reinforcing fibers. For example, at least one or more outer surfaces of the laminated structure incorporate a substantially unidirectional lamina while the inner side arranged integral with the outer surfaces consists of two-dimensionally woven, two- or three-axis fabric laminas, thus allowing the physical properties to be different between the outer surface side and the inner side.

A further process for making the fiber reinforced composite material comprises impregnating a network structure constituted integrally by the reinforcing fibers and the non-reinforcing fibers with a matrix and subjecting the network structure to the physical or chemical treatment to substantially remove or modify the non-reinforcing fibers. For example, at least one or more outer surfaces of the network structure incorporate a substantially unidirectional lamina while the inner side arranged integral with the outer surfaces consists of two- or three-axis web laminas, thus allowing the physical properties to be different between the outer surface side and the inner side.

Accordingly, the fiber reinforced composite material of the present invention will be higher in the bonding strength to other materials than conventional fiber reinforced composite materials and also improved in that the thermal conductivity is selectively enhanced in a desired direction.

The two-dimensionally woven fabric laminas may be bonded one over the other by needle punching or jet flow treatment.

The fiber reinforced composite material of the present invention has different loadings (Vf) of the reinforcing fibers in their respective fiber axes.

For example, assuming that the inner side consists of a three-dimensionally woven, three-axis orthogonal fiber reinforced composite referred to as 3D-3A hereinafter) and one surface of the outer side consists substantially of a three-dimensionally woven, one-axis fiber reinforced composite (referred to as 3D-1A), Vf of 3D-3A is 0.1 % to 96 % in the X, Y, and Z fiber axes respectively, preferably 1 % to 70 %, and more preferably 3 % to 60 %. Also, Vf of 3D-1A is 0.1 % to 96 %, preferably 10 % to 90 %, or more preferably 10 % to 70 %.

In this case, three vf values of 3D-3A in the X, Y, and z fiber axes may not be identical but different from each other. The total of the three Vf values is commonly less than 96 %, preferably less than 80 %, or more preferably less than 70 %.

The fiber reinforced composite material of the present invention allows the physical properties to be different between the inner side and the outer surface side. The physical properties include mechanical characteristics, thermal characteristics, and electromagnetic characteristics.

The mechanical characteristics are tensile strength, tension resiliency, compression strength, compression resiliency, stiffness, interlayer shearing strength, Charpy impact strength, and impact strength to sharp heating or cooling.

The thermal characteristics are thermal conductivity, thermal expansivity, and thermal capacity.

The electromagnetic characteristics are electrical resistivity, magnetic resistivity, magnetization, and dielectricity.

The physical properties of the fiber reinforced composite material of the present invention can be changed for various applications.

In a preferred example, the thermal conductivity of the fiber reinforced composite material, which comprises 3D-3A of the inner side oriented in the X, Y, and X axial directions and 3D-1A of one of the outer surfaces arranged continuous with the 3D-3A reinforcing fibers along the X fiber axis, is, 1 W/m K to 1200 W/m K along the X axial direction of 3D-3A at about the room temperature, preferably 10 W/m K to 1200 W/m K, or more preferably 100 W/m K to 1200 W/m K. The thermal conductivity along the Y axial direction is 1 W/m K to 1000 W/m K, preferably 10 W/m K to 800 W/m K, or more preferably 20 W/m K to 700 W/m K and along the Z axial direction 1 W/m K to 1000 W/m K, preferably 10 W/m K to 800 W/m K, or more preferably 20 W/m K to 700 W/m K. The thermal conductivity of 3D-1A along the X axial direction for fiber reinforcement is 10 W/m K to 1500 W/m K, preferably 10 W/m K to 1200 W/m K, or more preferably 100 W/m K to 1200 W/m K.

In another example, the thermal expansivity of the fiber reinforced composite material constituted integrally by 3D-3A and 3D-1A is on 3D-3A at about the room temperature 0.01x10⁻⁶ to 20x10⁻⁶ °C⁻¹, preferably 0.01x10⁻⁶ to 15x10⁻⁶ °C⁻¹, or more preferably 0.05x10⁻⁶ to 12x10⁻⁶ °C⁻¹ along each of the X, Y and Z directions. The thermal expansivity of 3D-1A is at about the room temperature 0.01x10⁻⁶ to 5x10⁻⁶ °C⁻¹, preferably 0.01x10⁻⁶ to 4x10⁻⁶ °C⁻¹, or more preferably 0.1x10⁻⁶ to 4x10⁻⁶ °C⁻¹ in the X direction, and 0.1x10⁻⁶ to 25x10⁻⁶ °C⁻¹, preferably 1x10⁻⁶ to 20x10⁻⁶ °C⁻¹, or more preferably 2x10⁻⁶ to 10x10⁻⁶ °C⁻¹ in both the Y and Z directions.

In a further example, the thermal capacity of the fiber reinforced composite material constituted integrally by 3D-3A and 3D-1A is on 3D-3A at about the room temperature 5 to 300 GPa along each of the X, Y, and Z directions. The thermal capacity of 3D-1A is at about the room temperature 50 to 300 GPa in the X direction and 1 to 100 GPa in both the Y and Z directions.

### Effects of the Invention

As set forth above, the present invention provides a fiber reinforced composite material or a unidirectionally fiber reinforced composite material which is changed in the dimension of fiber reinforcement between the inner side arid the outer surface side so that the mechanical and thermal properties are different between the inner side and the outer surface side.

The fiber reinforced composite material of the present invention may be used as advanced heat-resistive materials for aerospace applications in sheet, column, rod, tube, T, I, honeycomb, and other shapes.

### BRIEF DESCRIPTION OF THE DRAWING

Fig.1 is an explanatory view showing a fiber reinforced structure of a fiber reinforced composite material according to the present invention.

### DETAILED DESCRIPTION OF THE EMBODIMENTS

Embodiments of the present invention will now be described in more detail referring to the following examples. It would be understood that the present invention is not limited to the examples.

### (Example 1)

By weaving 3000 pitch carbon fibers of 10 micrometers in diameter and 40x10³ kgf/mm² in tensile strength in three, X, Y, and Z, fiber axial directions which are arranged at 90 degrees to each other in a vector space, a rectangular fiber block of 70 mm in the X fiber axis, 70 mm in the Y fiber axis, and 500 mm in the Z fiber axis was prepared. In particular, a region 15 mm deep from the outer surface of each side of the block along a plane defined by the Y and Z fiber axes was fabricated with a combination of the pitch carbon fibers in the X direction and aramid fibers in the Y and Z directions which are identical in the diameter to the pitch carbon fibers.

The loading V_{f} of the fibers in the fiber block was V_{fx} = 30%, V_{fy} = 12% and V_{fz} = 12% along their respective directions.

The fiber block was impregnated with phenol resin dissolved in an ethanol solution and dried. This step was repeated 10 times. Then, the fiber block was carbonized at 1000 ° C under a nitrogen atmosphere at a normal pressure and converted at 2500 ° C to graphite. Those impregnation, carbonization, and conversion to graphite steps were repeated 8 times and the block was finally turned to a C/C composite.

The C/C composite is found that its thermal expansivity along the Y fiber axis at about the room temperature is 0.5x10⁻⁶ °C⁻¹ in the inner side of three-axis fiber structure and 4.0x10 ⁻⁶ ° C ⁻¹ in the outer surface side of one-axis fiber structure.

### (Example 2)

By weaving 1000 SiC fibers of 15 micrometers in diameter in two, X and Y, directions which are arranged at 90 degrees to each other in a vector plane, a web of plain fabric of 300 mm in the X fiber axis by 300 mm in the Y fiber axis was prepared. In particular, the SiC fibers along the Y fiber axis in two edge areas 20 mm from both ends of the web were replaced with polyacrylonitrile carbon fibers which are identical in the diameter to the SiC fibers while the SiC fibers in the X fiber axis remain.

The web was electroless plated with 20 micrometers of metallic copper. 30 of the webs were laminated and bonded by vacuum hot pressing at 900 ° C to form a two-dimensionally fiber reinforced copper structure of 30 mm thick.

The fiber reinforced copper structure was then heated at 600 ° C in an oxygen gas to burn and remove the carbon fibers on the surfaces. As the result, a fiber reinforced copper structure consisting of the integrally laminated webs was produced.

The finer reinforced copper structure is found that its thermal expansivity along the Y fiber axis at neat the room temperature is 3.5x10⁻⁶ ° C ⁻¹ in the inner side of two-axis fabric and 11.0x10 ⁻⁶ ° C ⁻¹ in the outer surface side of one-axis fabric.

### (Example 3)

By weaving 9000 pitch carbon fibers of 10 micrometers in diameter and 70x10³ kgf/mm² in tensile resiliency along the X fiber axis and 6000 polyacrylonitrile (PAN) carbon fibers of 7 micrometers in diameter and 20x10³ kgf/mm² in tensile resiliency along the two, Y and Z, fiber axes, each axis being arranged at 90 degrees to the X fiber axis in a vector space, a rectangular fiber block of 1000 mm in the X fiber axis, 100 mm in the Y fiber axis, and 500 mm in the Z fiber axis was prepared.

In particular, the PAN fibers along the Y and Z fiber axes in two edge regions 20 mm from both ends respectively and a center region of 40 mm wide 480 to 520 mm from each end of one side along the X fiber axis were replaced with threads of cotton yarn which are identical in the diameter to the PAN fibers while the PAN fibers in the X fiber axis remain.

The loading V_{f} of the fibers in the fiber block was V_{fx} =40%, V_{fy} = 10%, and V_{fz} = 12% along their respective fiber axes.

The fiber block was impregnated with fused petroleum pitch to have a fiber reinforced composite. The fiber reinforced composite was subjected to hydrolysis with 80 mol% of sulfuric acid concentrated solution at 70 ° C to remove the cotton yarn having hydroxyl groups. As the result, a fiber reinforced composite material constituted integrally by three-axis reinforced portions and one-axis reinforced portions.

Then, the fiber reinforced composite material was carbonized at 800 ° C under an argon atmosphere at 1000 kgf/cm2 of high pressure and converted at 2500 ° C to graphite. Those impregnation, carbonization, and conversion to graphite steps were repeated 5 times and the composite material was finally turned to a C/C composite.

The C/C composite comprises the one-axis fabric in the two edge regions 20 mm from both ends respectively and the 40-mm wide center region 480 to 520 mm from each end of one side along the X fiber axis and the three-axis fabric in the remaining region.

The C/C composite was separated into two segments by cutting across the center of the 40-mm wide center region 480 to 520 mm from the end in the X axial direction or at a location 500 mm from the end. The resultant C/C composite segment comprises one-axially reinforced portions in the two edge regions 20 mm from the end and a three-axially reinforced portions in the 460-mm center region. The C/C composite segment is a rectangular block of 500 mm in the Z fiber axis, 100 mm in the Y fiber axis, and 500 mm in the Z fiber axis.

The C/C composite is found that its thermal conductivity along the X fiber axis at about the room temperature is 600 W/m K in the inner side and 800 W/m K in the outer surface side.

### (Example 4)

15000 pitch carbon fibers were aligned as warp yarn at no intervals. A mixture of silk and hot-melt fiber fusible at 80 ° C was woven as weft yarn at intervals of 10 mm across the warp carbon fibers to form a unidirectionally woven carbon fiber sheet having 250 g/m2 of stitch density.

The sheet was impregnated with phenol resin. 10 of the sheets were joined together to form a laminated structure. The laminated structure was then heated from the room temperature to 1000 ° C at 2 ° C/min to substantially modify the weft yarn. Finally, a fiber reinforced composite material for unidirectionally fiber reinforced composite is produced as used as a preform for fiber reinforced metallic structure.

### (Example 5)

12000 pitch carbon fibers were aligned as warp yarn at no intervals. A mixture of silk and hot-melt fiber fusible at 80 ° C was woven as weft yarn at intervals of 10 mm across the warp carbon fibers to form a unidirectionally woven carbon fiber sheet having 200 g/m2 of stitch density.

40 of the sheets were joined and held together with a tooling(s) and impregnated with petroleum pitch to have a laminated structure. The laminated structure was then heated from the room temperature to 800 ° C at 5 ° C/min to substantially modify the weft yarn. As the result, a fiber reinforced structure for unidirectionally fiber reinforced composite was produced as used as a preform for C/C composite. The fiber reinforced structure was impregnated with pitch, carbonized by heating, and converted to graphite. Those steps were repeated 3 times to have a C/C composite.

## Claims

1. A process for producing a C/C composite wherein the physical properties of at least one inner layer (2) and at least one outer layer (1) are different from each other; said process comprising:
(a) preparing. a fiber structure comprising reinforcing fibers and non-reinforcing fibers, wherein the number of fiber axes constituted by the reinforcing fibers is different between at least one outer layer (1) and at least one inner layer (2);
(b) subjecting the fiber structure to.a physical or chemical treatment, before or after impregnation with a matrix, to substantially remove or modify the non-reinforcing fibers; and
(c) carbonizing the matrix.

2. A process according to Claim 1, wherein at least one outer layer (1) of the produced C/C composite has a three-dimensional, unidirectional or one axis reinforcing fiber fabric and at least one inner layer (2) thereof has a three dimensional, two or three axis reinforcing fiber fabric.

3. A process according to Claim 1 wherein the fiber structure is in the form of a sheet comprising reinforcing fibers as warp yam and non-reinforcing fibers as weft yarn, said sheet being impregnated by a matrix; and wherein a plurality of said fiber sheets are formed into a laminated structure prior to being subjected to the physical or chemical treatment.

4. A process according to any preceding claim, wherein the fiber structure includes the reinforcing fibers in the inner side (2) and the non-reinforcing fibers in the outer surface side (1).

5. A process according to any preceding claim, wherein the physical treatment is thermal treatment.

6. A process according to any preceding claim, wherein the chemical treatment is selected from acid treatment, alkali treatment, and oxidation treatment.

7. A process according to any preceding claim wherein the reinforcing fiber is carbon fiber which is not substantially removed or modified by the physical or chemical treatment.

8. A process according to any preceding claim wherein the non-reinforcing fiber is selected from organic fibers, carbon fibers and metallic fibers which are. substantially removed or modified by the physical or chemical treatment.

9. A process according to any preceding claim wherein the matrix is selected from organic, ceramic, carbon and metallic materials.

10. A C/C composite comprising reinforcing fibers. embedded in a matrix, **characterised in that** the number of fiber axes constituted by the reinforcing fibers is different between at least one inner layer (2) and at least one outer layer (1) wherein the physical properties of said at least one inner layer and said at least one outer layer are different from each other.

## Patentansprüche

1. Verfahren zur Herstellung eines C/C-Komposits, in dem die physikalischen Eigenschaften von zumindest einer inneren Schicht (2) und zumindest einer äußeren Schicht (1) unterschiedlich sind; das Verfahren umfassend:
(a) Herstellung einer Faserstruktur, umfassend verstärkende Fasern und nicht verstärkende Fasern, wobei die Anzahl der Faserachsen, welche durch die verstärkenden Fasern gebildet werden, zwischen zumindest einer äußeren Schicht (1) und zumindest einer inneren Schicht (2) unterschiedlich ist;
(b) Unterziehen der Faserstruktur einer physikalischen oder chemischen Behandlung, vor oder nach dem Imprägnieren mit einer Matrix, um die nicht verstärkenden Fasern im Wesentlichen zu entfernen oder zu modifizieren; und
(c) Karbonisieren der Matrix.

2. Verfahren nach Anspruch 1, in dem zumindest eine äußere Schicht (1) des hergestellten C/C-Komposits ein dreidimensionales, unidirektionales oder einachsiges, verstärkendes Fasergewebe und zumindest eine innere Schicht (2) ein dreidimensionales, zwei-oder dreiachsiges verstärkendes Fasergewebe aufweist.

3. Verfahren nach Anspruch 1, in dem die Faserstruktur in Form eines Bogens vorliegt, umfassend verstärkende Fasern als Kettfaden und nicht verstärkende Fasern als Schussfaden, wobei die Schicht mit einer Matrix imprägniert ist; und in dem eine Vielzahl der Faserbögen vor der Anwendung der physikalischen oder chemischen Behandlung zu einer laminierten Struktur geformt werden.

4. Verfahren nach einem der vorstehenden Ansprüche, in dem die Faserstruktur die verstärkenden Fasern in der inneren Seite (2) und die nicht verstärkenden Fasern in der äußeren Oberflächenseite (1) beinhaltet.

5. Verfahren nach einem der vorstehenden Ansprüche, in dem die physikalische Behandlung eine thermische Behandlung ist.

6. Verfahren nach einem der vorstehenden Ansprüche, in dem die chemische Behandlung ausgewählt wird aus einer Säurebehandlung, alkalischen Behandlung und Oxidationsbehandlung.

7. Verfahren nach einem der vorstehenden Ansprüche, in dem die verstärkende Faser eine Kohlenstofffaser ist, die durch die physikalische oder chemische Behandlung im Wesentlichen nicht entfernt oder modifiziert wird.

8. Verfahren nach einem der vorstehenden Ansprüche, in dem die nicht verstärkende Faser ausgewählt wird aus organischen Fasern, Kohlenstofffasern und metallischen Fasern, die durch die physikalische oder chemische Behandlung im Wesentlichen entfernt oder modifiziert werden.

9. Verfahren nach einem der vorstehenden Ansprüche, in dem die Matrix ausgewählt wird aus organischen, keramischen, Kohlenstoff- und metallischen Materialien.

10. C/C-Komposit, umfassend in eine Matrix eingebettete verstärkende Fasern, **dadurch gekennzeichnet, dass** die Anzahl der Faserachsen, welche durch die verstärkenden Fasern gebildet werden, zwischen zumindest einer inneren Schicht (2) und zumindest einer äußeren Schicht (1) unterschiedlich ist, wobei die physikalischen Eigenschaften der zumindest einen inneren Schicht und der zumindest einen äußeren Schicht voneinander verschieden sind.

## Revendications

1. Un procédé pour produire un composite C/C dans lequel les propriétés physiques d'au moins une couche intérieure (2) et d'au moins une couche extérieure (1) sont mutuellement différentes; ce procédé comprenant les opérations suivantes:
(a) on prépare une structure de fibres comprenant des fibres de renfort et des fibres de non-renfort, dans laquelle le nombre d'axes de fibres constitués par les fibres de renfort est différent entre au moins une couche extérieure (1) et au moins une couche intérieure (2);
(b) on soumet la structure de fibres à un traitement physique ou chimique, avant ou après imprégnation avec une matrice, pour éliminer ou modifier notablement les fibres de non-renfort; et
(c) on carbonise la matrice.

2. Un procédé selon la revendication 1, dans lequel au moins une couche extérieure (1) du composite C/C qui est produit a un tissu de fibres de renfort tridimensionnel, unidirectionnel ou uniaxial, et au moins une couche intérieure (2) de ce composite a un tissu de fibres de renfort tridimensionnel, biaxial ou triaxial.

3. Un procédé selon la revendication 1, dans lequel la structure de fibres se présente sous la forme d'une nappe comprenant des fibres de renfort en tant que fil de chaîne et des fibres de non-renfort en tant que fil de trame, cette nappe étant imprégnée par une matrice; et dans lequel une multiplicité de ces nappes de fibres sont assemblées en une structure feuilletée avant d'être soumises au traitement physique ou chimique.

4. Un procédé selon l'une quelconque des revendications précédentes, dans lequel la structure de fibres comprend les fibres de renfort du côté intérieur (2) et les fibres de non-renfort du côté de la surface extérieure (1).

5. Un procédé selon l'une quelconque des revendications précédentes, dans lequel le traitement physique est un traitement thermique.

6. Un procédé selon l'une quelconque des revendications précédentes, dans lequel le traitement chimique est sélectionné parmi un traitement par un acide, un traitement par un alcali et un traitement d'oxydation.

7. Un procédé selon l'une quelconque des revendications précédentes, dans lequel la fibre de renfort est une fibre de carbone qui n'est pas éliminée ou modifiée notablement par le traitement physique ou chimique.

8. Un procédé selon l'une quelconque des revendications précédentes, dans lequel la fibre de non-renfort est sélectionnée parmi des fibres organiques, des fibres de carbone et des fibres métalliques qui sont éliminées ou modifiées notablement par le traitement physique ou chimique.

9. Un procédé selon l'une quelconque des revendications précédentes, dans lequel la matrice est sélectionnée parmi des matériaux organiques, céramiques, à base de carbone et métalliques.

10. Un composite C/C comprenant des fibres de renfort noyées dans une matrice, **caractérisé en ce que** le nombre d'axes de fibres constitués par les fibres de renfort est différent entre au moins une couche intérieure (2) et au moins une couche extérieure (1), dans lequel les propriétés physiques de la couche intérieure, ou des couches intérieures, et celles de la couche extérieure, ou des couches extérieures, sont mutuellement différentes.
